# NOUVEAU FASCICULE DE BREVET EUROPEEN

(11) **EP 0 396 175 B2**
(45) Date de publication et mention de la décision concernant l'opposition: **11.07.2001**
(45) Mention de la délivrance du brevet: 25.08.1993
(21) Numéro de dépôt: 90201016.4
(22) Date de dépôt: 23.04.1990
(51) Int. Cl.: C01B 15/12, F26B 9/06

(54) **Procédé pour la conservation du perborate monohydraté**
Verfahren zur Haltbarmachung von Natriumperboratmonohydrat
Process for conserving sodium perborate monohydrate

(30) Priorité: 03.05.1989 IT 2036189
(43) Date de publication de la demande: 07.11.1990
(73) Titulaire: INTEROX CHIMICA S.p.A., I-57013 Rosignano-Solvay (LI) (IT)
(72) Inventeur: Reginato, Luigi, I-57013 Rosignano-Solvay/Livorno (IT); Pastacaldi, Alessandra, I-57013 Rosignano-Solvay/Livorno (IT)
(74) Mandataire: Decamps, Alain René François

(56) Documents cités:
- EP-A- 0 055 787
- WO-A-87/07937
- DE-A- 3 805 551
- FR-A- 1 324 171
- OA-A- 5 517

## Description

La présente invention appartient au domaine des techniques de conservation du perborate monohydraté.

Il est connu de longue date que le perborate de sodium monohydraté, contrairement au perborate de sodium tétrahydraté, est un produit hygroscopique qui doit être conservé à l'abri de l'humidité contenue dans l'air atmosphérique. Il est aussi recommandé de stocker le perborate de sodium monohydraté dans un endroit frais (ULLMANS Encyklopädie der technischen Chemie, Verlag Chemie, Weinheim, 1979, 4er Auflage, Band 17, pages 718 à 719, * page 719 section 5.1.1.5., 3e paragraphe et section 5.1.1.6., 1er paragraphe ^{*}).

S'il est relativement aisé de satisfaire à la première condition, par exemple en réalisant le stockage du perborate en silos fermés ou en sacs imperméables à l'humidité, il n'en est pas de même en ce qui concerne la deuxième condition. En effet, il est généralement difficile et peu pratique de concevoir des silos de stockage du perborate monohydraté équipés de dispositifs de refroidissement, de même qu'il n'est en général pas possible de conserver les sacs étanches contenant le perborate monohydraté dans des chambres climatisées spécialement construites à cet effet.

Il en résulte que le perborate monohydraté est le plus souvent stocké dans des installations de conservation qui sont en équilibre thermique avec l'atmosphère ambiante. Or, dans les cas où la température ambiante est relativement élevée, comme c'est souvent la règle en été ou dans les pays bénéficiant d'un climat chaud, il n'est pas rare que la stabilité des stocks de perborate monohydraté soit compromise. Les phénomènes de décomposition du produit qui surviennent alors donnent lieu à divers inconvénients tels que : diminution, voire dans certains cas disparition, de la teneur en oxygène actif du produit, prise en masse des granules, libération d'eau, dissolution partielle du perborate. Ces phénomènes, lorsqu'ils se produisent à température ambiante élevée, généralement supérieure à 35°C, peuvent même conduire à l'auto-échauffement de la masse des granules et induire une série de réactions de décomposition rapide de l'ensemble de la masse de perborate.

L'invention entend remédier à ces inconvénients en fournissant un procédé de conservation de granules de perborate de sodium monohydraté qui permette le stockage du produit à des températures relativement élevées sans induire de décomposition de la masse des granules.

A cet effet, l'invention concerne un procédé de conservation de granules de perborate de sodium monohydraté à température ambiante élevée comprise entre 10 et 65°C, selon lequel les granules sont stockés en vrac dans une enceinte fermée étanche a l'atmosphère ambiante, on introduit dans l'enceinte fermée un faible débit d'air sec, on force ce débit d'air à traverser la masse des granules et on pratique une petite ouverture dans la partie de l'enceinte opposée à celle où l'on introduit le débit d'air, de manière à permettre l'échappement de l'air dans l'atmosphère.

Le perborate de sodium monohydraté est le produit bien connu qui répond à la formule brute théorique NaBO₂.H₂O₂ et dont la teneur en oxygène actif est comprise entre 150 et 160 g/kg. Ce produit se présente sous forme de granules solides dont le diamètre moyen se situe entre 0,10 mm et 0,90 mm et, de préférence, entre 0,15 et 0,60 mm.

L'enceinte fermée dans laquelle le perborate de sodium monohydraté est stocké en vrac désigne toute espèce de volume fermé étanche aux gaz et, en particulier, à l'atmosphère ambiante. Différentes formes et volumes d'enceintes peuvent convenir et sont choisies selon les conditions d'utilisation du perborate monohydraté. On peut ainsi trouver des silos cylindriques disposés de manière que l'axe du cylindre soit vertical ou des silos cylindriques dont l'axe est horizontal.

Le plus souvent, on préfère que les silos de forme cylindrique soient disposés verticalement pour des raisons évidentes d'encombrement minimum ainsi que pour assurer un déchargement plus aisé de la matière stockée.

Les silos horizontaux peuvent aussi constituer la cuve d'un camion ou d'un wagon citerne destiné au transport du perborate de sodium monohydraté en granules.

L'enceinte fermée peut aussi constituer un silo de forme parallélipipédique ou prismatique. Dans le premier cas, le parallélipipède peut reposer indifféremment sur une des faces opposées à ses arêtes de plus grande dimension ou au contraire reposer sur une face contenant son arête de plus grande dimension.

Le volume de l'enceinte peut varier fortement en fonction du type d'utilisation du perborate. Il estgénéralement compris entre 1 m³ et 800 m³.

Selon l'invention, on introduit dans l'enceinte fermée un faible débit d'air sec. On réalise aisément l'introduction de l'air sec en pratiquant dans une paroi de l'enceinte sur laquelle reposent les granules de perborate une petite ouverture permettant la fixation d'une tubulure amenant l'air sec.

Par air sec, on entend de l'air dont le point de rosée est inférieur à -20°C, de préférence inférieur à - 30°C.

Selon une variante non essentielle de l'invention, l'air sec peut être distribué dans l'enceinte par un dispositif qui réalise sa dispersion sur l'ensemble de la section de l'enceinte, comme par exemple, une rampe portant des becs assurant la répartition de l'air ou des pommes de distribution en matière poreuse.

Dans la partie de l'enceinte opposée à celle de l'introduction de l'air, on pratique une petite ouverture de diamètre semblable à celui de la tubulure d'admission de l'air dans le but de permettre la sortie de l'air introduit.

L'air sec est forcé à travers les granules de l'enceinte en le portant à une légère surpression par rapport à la pression atmosphérique. La pression de l'air doit être choisie pour chaque enceinte particulière de façon à vaincre les pertes de charge dans la masse des granules et à réaliser un débit de balayage compris entre 1 et 8 l/h.kg de perborate et, de préférence, un débit de 2 à 5 l/h.kg de perborate.

Les exemples qui suivent ont pour but d'illustrer l'invention sans en limiter sa portée.

### Exemple 1

Dans un microcalorimètre de marque LKB type N° 2277 équipé d'une cellule de perfusion N° 2277-402, on a placé 1 g de perborate monohydraté. Après mise en équilibre thermique à 40°C de l'ensemble de la masse constituée par le perborate et la cellule de mesure, on a détecté sur l'enregistreur du calorimètre un dégagement de chaleur qui se stabilise à une valeur proche de 2 µW/g après plus de 20h de fonctionnement.

### Exemple 2

Dans la même cellule que celle décrite à l'exemple 1, on a placé 1 g de perborate monohydraté et on a balayé la cellule au moyen d'un courant d'air sec sous un débit de 5 cm³/h.

La cellule de perfusion N° 2277-402 utilisée a été conçue pour réaliser la mise à l'équilibre de l'air à 40°C avant son contact avec le perborate monohydraté contenu dans la cellule.

L'effet thermique mesuré au calorimètre s'est rapidement stabilisé, après quelques minutes, à une valeur plus basse endothermique, d'environ -24 µW/g.

La détermination de la quantité d'eau émise à 40°C par l'échantillon de perborate dans l'air de balayage a révélé la perte d'environ 81.10⁻⁶ mole H₂O/mole de perborate monohydraté.

### Exemple 3

Dans la même cellule que celle décrite dans les exemples 1 et 2 on a de nouveau placé 1 g de perborate monohydraté et on a balayé la cellule au moyen d'un courant d'air saturé d'eau à 40°C sous un débit de 5 cm³/h. On a mesuré dans ces conditions au microcalorimètre un comportement exothermique très instable du perborate de sodium monohydraté, avec des oscillations exothermiques dont l'amplitude a atteint 30 µW/g.

### Exemple 4

Deux cylindres en verre de diamètre de 7,5 cm et de hauteur de 45 cm reposant sur leur base fermée et munis d'une double enveloppe permettant la thermostatisation par circulation d'eau à température constante ont été remplis chacun de 400 g de perborate monohydraté et obturés dans leur partie supérieure par un film en polyéthylène transparent. Dans un des deux cylindres, on a plongé un tube jusqu'à la base permettant l'injection d'air et on a percé le film en polyéthylène obturant le sommet du cylindre par une aiguille hypodermique creuse pour laisser s'échapper l'air de balayage.

Après avoir amené l'ensemble des cylindres et leur contenu à une température de 80°C, on a procédé au balayage d'un des deux cylindres au moyen d'air sec préchauffé à 80°C sous un débit de 3,0 l/h.

On a poursuivi le stockage à 80°C des deux cylindres et le balayage d'un des deux cylindres pendant 16 heures. On a remarqué que le perborate du cylindre qui n'a pas subi de balayage a pris en masse et a augmenté considérablement de volume au point de soulever le film de polyéthylène obturant le sommet du cylindre et de sortir de celui-ci.

L'analyse des produits après la période d'essai a montré que le perborate n'ayant pas subi de balayage à l'air sec était totalement décomposé et ne contenait plus d'oxygène actif décelable par permanganométrie, tandis que le perborate ayant bénéficié du balayage par le courant d'air sec à 80°C se présentait sous deux aspects, c'est-à-dire pris en masse dans la moitié supérieure du cylindre et en poudre coulable dans la moitié inférieure. Les teneurs en oxygène actif, mesurées par permanganométrie, ont été de 133,9 g oxygène/kg perborate pour la partie en poudre coulable et de 96,9 g/kg pour la partie prise en masse. La teneur en oxygène actif du perborate de départ était de 156,7 g/kg.

### Exemple 5

On a répété l'exemple 4 sur un autre perborate monohyraté dans les mêmes conditions opératoires excepté le débit d'air sec de balayage qui a été réduit à 1,5 l/h et la durée de l'essai qui a été portée à 48 h.

A la fin de l'essai, dans le cylindre ayant subi le balayage d'air sec, le perborate monohydraté a gardé l'aspect d'une poudre coulable dans la totalité du cylindre. Le perborate du cylindre n'ayant pas bénéficié du balayage d'air sec était complètement aggloméré et était sorti du cylindre. La poudre coulable titrait encore à la fin de l'essai 120 g d'oxygène actif/kg, tandis que le perborate pris en masse ne contenait plus que 50,4 g d'oxygène actif/kg au sommet du cylindre et seulement 11,9 g/kg au fond du cylindre. Le perborate de départ contenait 156,0 g d'oxygène actif/kg.

## Revendications

1. Procédé de conservation de granules de perborate de sodium monohydraté à température ambiante élevée comprise entre 10 et 65°C, selon lequel les granules sont stockés en vrac dans une enceinte fermée étanches à l'atmosphère ambiante, caractérisé en ce que l'on introduit pendant la durée du stockage dans l'enceinte fermée un faible débit d'air sec dont le point de rosée est inférieur à -20°C, que l'on force ce débit d'air à traverser la masse des granules et que l'on pratique une petite ouverture dans la partie de l'enceinte opposée à celle où l'on introduit le débit d'air, de manière à permettre l'échappement de l'air dans l'atmosphère.

2. Procédé selon la revendication 1, caractérisé en ce que le débit d'air sec est compris entre 1 et 8 l/h.kg de perborate.

3. Procédé selon l'une quelconque des revendications 1 à 2, caractérisé en ce que l'on introduit le débit d'air par un orifice pratiqué dans une des faces de plus faible superficie de l'enceinte.

4. Procédé selon l'une quelconque des revendications 1 à 3, caractérisé en ce que l'enceinte fermée est un silo de forme cylindrique d'axe vertical.

5. Procédé selon l'une quelconque des revendications 1 à 3, caractérisé en ce que l'enceinte fermée est un silo de forme parallélipipédique reposant sur une des faces opposée à ses arêtes de plus grande dimension.

6. Procédé selon l'une quelconque des revendications 1 à 3, caractérisé en ce que l'enceinte fermée est un silo de forme cylindrique d'axe horizontal.

7. Procédé selon la revendication 6, caractérisé en ce que le silo constitue la cuve d'un wagon ou d'un camion citerne destiné au transport de matières solides granulaires.

8. Procédé selon l'une quelconque des revendications 1 à 3, caractérisé en ce que l'enceinte fermée est un silo de forme parallélipipédique reposant sur une face contenant son arête de plus grande dimension.

9. Procédé selon l'une quelconque des revendications 1 à 3, caractérisé en ce que l'enceinte fermée est un silo de forme prismatique.

## Claims

1. Method of storing sodium perborate monohydrate granules at elevated surrounding temperature of between 10 and 65°C, according to which the granules are stored in bulk in a closed enclosure proofed against the surrounding atmosphere, characterized in that, during the storage, a slow flow of dry air, the dew point of which is less than -20°C, is introduced into the closed enclosure, that this flow of air is forced to pass through the mass of the granules and that a small opening is made in the part of the enclosure away from that where the flow of air is introduced, so as to allow the air to escape into the atmosphere.

2. Method according to Claim 1, characterized in that the dry air flow is between 1 and 8 l/h kg of perborate.

3. Method according to either of Claims 1 and 2, characterized in that the flow of air is introduced through an orifice made in one of the faces of smallest surface area of the enclosure.

4. Method according to any one of Claims 1 to 3, characterized in that the closed enclosure is a silo of cylindrical shape with a vertical axis.

5. Method according to any one of Claims 1 to 3, characterized in that the closed enclosure is a silo of parallelepipedal shape resting on one of the faces opposite its longest ridges.

6. Method according to any one of Claims 1 to 3, characterized in that the closed enclosure is a silo of cylindrical shape with a horizontal axis.

7. Method according to Claim 6, characterized in that the silo constitutes the vessel of a tank wagon or truck intended for conveying granular solid materials.

8. Method according to any one of Claims 1 to 3, characterized in that the closed enclosure is a silo of parallelepipedal shape resting on a face containing its longest ridge.

9. Method according to any one of Claims 1 to 3, characterized in that the closed enclosure is a silo of prismatic shape.

## Patentansprüche

1. Verfahren zur Haltbarmachung von Natriumperborat-monohydrat-Körnchen bei erhöhter Umgebungstemperatur zwischen 10 und 65°C, gemäß dem die Körnchen in loser Schüttung in einem geschlossenen, gegenüber der Umgebungsatmosphäre dichten Raum gelagert werden, dadurch gekennzeichnet, daß man während der Däuer der Lagerung in den geschlossenen Raum eine geringe Menge trockener Luft einführt, deren Taupunkt unterhalb -20°C liegt, diese Luftmenge dazu bringt, die Masse der Körnchen zu durchströmen und eine kleine Öffnung in dem Teil des Raumes anbringt, der demjenigen entgegengesetzt ist, in den man die Luftmenge einführt, so daß die Luft in die Atmosphäre entweichen kann.

2. Verfahren nach Anspruch 1, dadurch gekennzeichnet, daß die Menge an trockener Luft zwischen 1 und 8 l/h.kg Perborat beträgt.

3. Verfahren nach einem der Ansprüche 1 bis 2, dadurch gekennzeichnet, daß man die Luftmenge durch eine Öffnung einleitet, die in einer der Seiten mit geringster Fläche des Raumes angebracht ist.

4. Verfahren nach einem der Ansprüche 1 bis 3, dadurch gekennzeichnet, daß der geschlossene Raum ein zylinderförmiges Silo mit vertikaler Achse ist.

5. Verfahren nach einem der Ansprüche 1 bis 3, dadurch gekennzeichnet, daß der geschlossene Raum ein parallelepipedförmiges Silo ist, das auf einer der Seiten liegt, die seinen Kanten mit größter Abmessung entgegengesetzt ist.

6. Verfahren nach einem der Ansprüche 1 bis 3, dadurch gekennzeichnet, daß der geschlossene Raum ein zylinderförmiges Silo mit horizontaler Achse ist.

7. Verfahren nach Anspruch 6, dadurch gekennzeichnet, daß das Silo den Behälter eines zum Transport für feste körnchenförmige Materialien bestimmten Kesselwaggons oder -lastkraftwagens darstellt.

8. Verfahren nach einem der Ansprüche 1 bis 3, dadurch gekennzeichnet, daß der geschlossene Raum ein parallelepipedförmiges Silo ist, das auf einer Seite ruht, die dessen Kante mit größtem Ausmaß enthält.

9. Verfahren nach einem der Ansprüche 1 bis 3, dadurch gekennzeichnet, daß der geschlossene Raum ein prismenförmiges Silo ist.
